# EUROPEAN PATENT APPLICATION

(11) **EP 2 237 518 A1**
(43) Date of publication of application: **06.10.2010**
(21) Application number: 09305269.4
(22) Date of filing: 30.03.2009
(51) Int. Cl.: H04L 29/06

(54) **Pre-pushing of popular content in a network of end-user equipments**

(71) Applicant: Mitsubishi Electric Corporation, Tokyo 100-8310 (JP); Mitsubishi Electric R&D Centre Europe B.V., 1119 NS Schiphol Rijk Amsterdam (NL)
(72) Inventor: Mentre, David, 35708 Rennes Cédex 7 (FR); Rambaud, Luc, 35708 Rennes Cédex 7 (FR)
(74) Representative: Cabinet Plasseraud

(57) **Abstract**

There are described methods and a device for providing access by users of an Internet Service Provider or ISP network (100), to contents stored on the Internet (130). End-user equipments (101-104) of the ISP network monitor the contents downloaded from the Internet upon queries from users, and regularly send to a central server (220) of the ISP network a list of downloaded contents. The central server sets-up a list of popular contents based on lists of downloaded contents respectively sent by a plurality of the end-user equipments, and send them a request to pre-fetch popular contents of that list. The pre-fetched popular contents are stored into a storage medium of the end-user equipments. Upon later query from a user to download one of these popular contents, the popular content is accessed in the storage medium of the end-user equipment.

## Description

### FIELD OF THE INVENTION

The present invention generally relates to the techniques of providing access by users to contents which are available through a data transmission network, such as Internet, with the aid of end-user equipments of an Internet Service Providers network, commonly referred to as Set-Top Boxes.

### BACKGROUND OF THE INVENTION

Due to high bandwidth constraints, Internet Service Providers (ISP) permanently seek to optimize the distribution of contents to their network of Set-Top Boxes (STB).

Within the context of the present description, the expression "content" refers to a data file of any type, e.g., an audio or video file, a text file, an executable file like a Windows® operating system update ("patch"), etc., which a user may wish to access via his/her STB when connected to the Internet.

It is considered that, statistically, more than 80% of the access queries performed by users relate to hardly 20% of the whole contents which are accessible via the Internet. Such frequently requested contents are called "popular contents" in what follows and in the appended claims.

One possible solution for reducing access time to popular contents while preserving the bandwidth of the network and thus enhancing the Quality-of-Service (*QoS*) perceived by all users, consists in using cache memory. More particularly, popular contents may be pre-fetched into cache memories in order to provide for their fast and efficient distribution to the end-users who may potentially request access to them at a later time.

### DESCRIPTION OF THE RELATED ART

The approaches described in this section could be pursued, but are not necessarily approaches that have been previously conceived or pursued.

Therefore, unless otherwise indicated herein, the approaches described in this section are not prior art to the claims in this application and are not admitted to be prior art by inclusion in this section.

Within the regular infrastructure of the Internet, there are HyperText Transmission Protocol (HTTP) proxy caches that can work together to exchange contents, e.g. Squid. But they do not pre-fetch content, neither communicate with other proxies to identify frequently requested contents.

So-called "Peer-to-Peer" (P2P) networks can be used to optimize available network bandwidth, but a specific software need to be installed on the end-user computer and this software should explicitly be used. Stated otherwise, its use is not transparent to the user.

Content Distribution Networks (CDN) allow for a content provider to pre-fetch content on servers distributed around the network so as to optimize network delay and bandwidth and enhance the *QoS* perceived by end-users. However, CDN networks have the drawback that they are under the control of the content provider and not of the ISP. Moreover, each content provider may independently setup is own CDN infrastructure while some content providers do not have the resources to setup a CDN. Therefore, content pre-fetching cannot be handled in a systematic way.

Finally, reference US 7,330,933 discloses a computer implemented method for updating application data in a production data cache. More precisely, the method includes pre-loading of cache data on a staging server. Statistical data is captured representative of application data usage and analyzed in accordance with customizable rules. For the purpose of ascertaining such statistical data, the specific information which is sought from the web servers is the Uniform Resource Locator (URL) information for pages referenced by users, and is typically captured in the web server log files. Candidate data for caching is determined from such statistical data and pre-loaded onto the staging server. This pre-loaded, staged data is then pushed into the data cache of a production server, thereby reducing downtime of the cache.

### SUMMARY OF THE INVENTION

To address the needs and overcome at least some of the drawbacks which have been identified in the foregoing, a first aspect of the invention provides a method according to claim 1 for providing access by users of an Internet Service Provider or ISP network, to contents stored on the Internet.

The method comprises the following steps, which are carried out at an end-user equipment of the ISP network:
· monitoring the contents downloaded in the end-user equipment from the Internet upon queries from a user, and sending to the central server of the ISP network a list of at least some of said downloaded contents;
· receiving from the central server a request to pre-fetch a list of popular contents set up at said central server based on lists of downloaded contents respectively sent by a plurality of the end-user equipments of the ISP network;
· pre-fetching the popular contents defined by the list of popular contents and storing the pre-fetched popular contents into a storage medium of the end-user equipment;
· upon later query from the user to download one of the popular contents stored in the storage medium, accessing to said one of the popular contents in the storage medium of the end-user equipment.

A second aspect of the invention is directed to a method according to claim 6, for providing access by users of an Internet Service Provider or ISP network to contents stored in the Internet.

The method of the second aspect comprises the following steps, which are carried out at a central server of the ISP network:
· receiving from a plurality end-user equipments of the ISP network respective lists of at least some of contents downloaded in each one of said end-user equipments from the Internet upon queries from user;
· setting up a list of popular contents based on the received lists of downloaded contents; and,
· sending to at least some of the end-user equipments of the ISP network a request to pre-fetch and store the popular contents defined by the set up list, so that, upon later query from a user to download one of the popular contents, said requested popular content may be accessed in a storage medium of the end-user equipment used for making said later query.

According to a third aspect, the invention also makes provisions for a device according to claim 11 for providing access by a user of an Internet Service Provider or ISP network, to contents stored on the Internet.

The device comprises:
· an application level proxy unit;
· a storage medium adapted to store contents; and,
· a download unit adapted to pre-fetch contents and store the pre-fetched contents in the storage medium, under control of the application level proxy unit
wherein the application level proxy unit is configured:
· to monitor contents downloaded from the Internet upon queries from a user;
· to send to a central server of the ISP network a list of at least some of said downloaded contents;
· to control the download unit, responsive to a request received from the central server, to pre-fetch a list of popular contents set up at said central server based on lists of downloaded contents respectively sent by a plurality of end-user equipments of the ISP network and to store the pre-fetched contents into the storage medium; and,
· to access one of the popular contents stored in the storage medium, upon later query from the user to download said popular content.

A fourth aspect of the present invention relates to an end-user equipment of an Internet Service Provider or ISP network according to claim 15, which comprises a device according to the third aspect.

Advantageously, the invention involves reports on the activity of the end-user equipments, i.e., the Set-Top Boxes, of the ISP network. The selection of popular contents to be pre-fetched is therefore very efficient, as it is based on the true activity of the ISP clients and thus accurately takes into account their preferences as to downloading of contents. It is also cost-effective and easy to implement, as its implementation relies on components of the ISP network only and thus may be carried out on a stand-alone basis.

### BRIEF DESCRIPTION OF THE DRAWINGS

The present invention is illustrated by way of example, and not by way of limitation, in the accompanying drawings, in which:
- FIG.1 shows diagrammatically a typical ISP network of Set-Top Boxes;
- FIG.2 is a block diagram of a device according to embodiments of the third aspect of the invention;
- FIG.3 is diagram illustrating the stack of protocol layers of one software comprised in the device of FIG.2; and,
- FIG.4 through FIG.9 are mixed flow-chart / block diagrams which illustrate steps of a method according to embodiments of first aspect of the present invention

### DESCRIPTION OF PREFERRED EMBODIMENTS

In the drawings, like reference numbers designate like parts in various Figures.

Expressions such as "comprise", "include", "incorporate", "contain", "is" and "have" are to be construed in a non-exclusive manner when interpreting the description and its associated claims, namely construed to allow for other items or components which are not explicitly defined also to be present.

The expression "Internet" refers to any broadband data transmission network, and encompasses, while not being limited to, the well-known World Wide Web which supports transmission of data according to the Internet Protocol (IP) and data access request according to protocols such as Hypertext Transfer Protocol (HTTP) or the File Transfer Protocol (FTP).

The expression "content" refers to an item of data which is transferable through a data transmission network such as Internet. In particular, it may take the form of a data file of any type, e.g., audio, video or audiovisual (under formats like WAVE, MPEG, JPEG, etc.), a text file, an executable file, a Windows® patch, a Web page (which is a ".htm file"), etc., which a user may wish to access via the Internet. When data is being referred to as audiovisual data, it can represent audio only, video only or still pictures only or a combination thereof.

The expressions "content request" and "query" are used for the purpose of the present description to designate a specific content. It might consist of a URL, a FTP address, a P2P identifier, etc. For example, the URL "http://www.google.fr" is a content request which designates the specific content consisting of the Web page which corresponds to the Website portal of Google® (i.e., a HTML file which reads: « <html><head><meta http-equiv="content-type" content="text/html; charset=UTF-8"><title>Google</title><script> ... ») and which, in practice, is loaded by the browser in response to the user validating the content request.

The expression "Set-Top Box" (STB) refers to an end-user equipment or terminal, which is a simplified computer system that handles the link to the ISP network that is provided (usually rented) to any subscriber of an Internet Service Provider. When connected together and to a central server (Web server) of the ISP, all the Set-Top boxes of a specified ISP form the ISP network. In the country of France, for instance, such Set-Top Boxes are marketed under such brand names as Freebox® (for the ISP known as Free SAS), Livebox® (for the ISP known as Orange SA), Neufbox® (for the ISP known as SFR), etc.

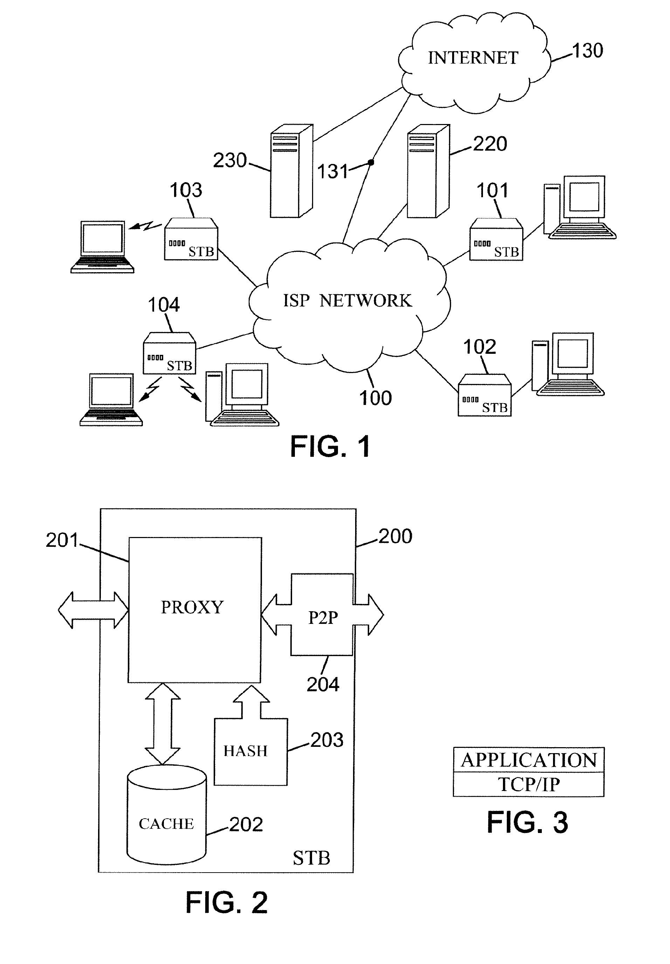

Referring to **FIG.1****,** there is shown therein a schematic diagram of an ISP network. Some Internet Service Providers gather several million users. For the purpose of the present description, some users are symbolically represented by their personal computer, which commonly are general purpose computer, either of the desktop or laptop type. Each of those users has one Set-Top Box like Set-Top Boxes 101 through 104, which is connected, typically through ADSL or optic fibre lines, to the ISP Network 100 and then to the Internet 130. A central server 220 of the ISP is also connected to the ISP Network 100. This server is hosting the contents which the ISP provides access to, and in particular the Web pages of its website or portal, which may be regarded as a particular kind of contents. Indeed, Web pages are typically Hypertext Markup Language (HTML) files.

As it will be appreciated by those of ordinary skills in the art, the interface between the users and their Set-Top Box may be supported by a wired connection, e.g. USB or FireWire (IEEE 1394), like for Set-Top Boxes 101 and 102 in **FIG.1****,** or alternately by a wireless connection, e.g. WiFi, like for Set-Top Boxes 103 and 104. In the both cases, the interface with one STB may be shared by several users, like one user using a laptop computer and another one using a desktop computer as illustrated for Set-Top Box 104 in Figure 1. Also in the case of a wired connection to the STB, several users may actually connect with the ISP network via one and the same STB when this STB is connected to a local network, e.g. through a hub.

To summarize, and independently of any specific situation among those mentioned in the above paragraph and any other situations which the one with ordinary skills in the art may become aware of, the Set-Top Box 101-104 and the ISP central server 220 form what is called the ISP network 100 which is connected to the Internet 130.

The ISP network is connected to other networks, in particular transit networks, with links of limited capacity 131. At regular intervals, many of the ISP's users reference the same content (e.g. look at a YouTube video, download a Windows® operating system update file, etc.) within a close time window. Such content may be accessible from the central server 220 of the ISP, and/or from any other server, like server 230, which is also connected to the Internet.

The massive download of popular contents fills up the ISP network, especially at its interconnection links 131, which induces delay and other connectivity issues for all ISP users. Moreover, this content can be of non negligible size, leading to long download time and degrading user experience.

Turning now to **FIG.2****,** there will now be described the main elements which are comprised in a device according to embodiments of the invention. Operation of the device according to the method of the invention will then be described in more details.

The device is typically contained in the Set-Top Boxes of the ISP network, as the ones which are depicted in **FIG.1****.** This device first comprises an application level proxy part 201 (typically HTTP proxy). As is well-known by those with ordinary skills in the relevant art, and with reference to the client/server model, a proxy is a software element which, by definition, is regarded as a server by the user computer, and as a client by the network. Referring to the layered software architecture model illustrated by **FIG.3****,** a proxy comprises the application protocol of the client/user (as it needs to identify the content requested by the client/user), on top of the transport protocol supported by the ISP network, e.g. TCP/IP.

The proxy part 201 has the capability to monitor all the content requests/queries made by the user, e.g. the URL referenced with HTTP protocol, or the FTP address, or the P2P identifier (for instance a ".torrent file" when BitTorrent® is used), depending on the type of access which is requested by the user.

For each one of the requested contents, the STB stores the content request (e.g., the content URL) and a unique content identifier (typically a cryptographically strong checksum like SHA-256, as will be further discussed below). Preferably, it also stores the content size.

To this end, the STB has some storage capacity, as illustrated by memory 202 in FIG.2, like a hard disk drive or any other storage means. Storage medium 202 also comprises a content cache that can store pre-fetched contents.

As far as updating of data stored in memory 202 is concerned, pre-fetch requests received by the STB from the operator in accordance with the principles of the invention that will be explained below, have priority over caching that could be done autonomously by the STB. As will be further detailed below, this cache is also used by the proxy part 201 to return a popular content matching a later query placed by the user.

The device also has a capability, namely via a computational unit 203, to compute identifiers on downloaded contents, under control by the proxy part 201. Such an identifier is uniquely associated with any content. It is computed by unit 203 in respect of any content that is downloaded responsive to a user query. Typically, unit 203 may be a hardware acceleration unit implementing a cryptographic hash function, e.g. SHA-256, for performance reason. As will be noted, the value returned by such a cryptographic hash function is actually quasi-unique only (not *stricto sensu* unique), because one cannot be 100% sure that two different contents will not give the same identifier as a result. However, it is commonly accepted within the relevant art that the result returned by such a hash function can be held unique, as mathematically there are far more than 99,99% chances that two different results are returned for two different inputs, even when they are only slightly distinct one from the other.

It shall be noted that the hash function is directly applied to the content itself, namely to the image, text, video and/or audio data which form the content. It is not applied to the URL or any locator, name, or address within the Internet, of the content. The effect of this feature will become apparent in view of the following description of embodiments of the method of the invention.

Finally, the STB has a unit 204 to download contents, which may be implemented as a software unit. Typically such a software unit may be a P2P client, e.g. a BitTorrent® client. The download unit 204 operates under the control of the proxy part 201.

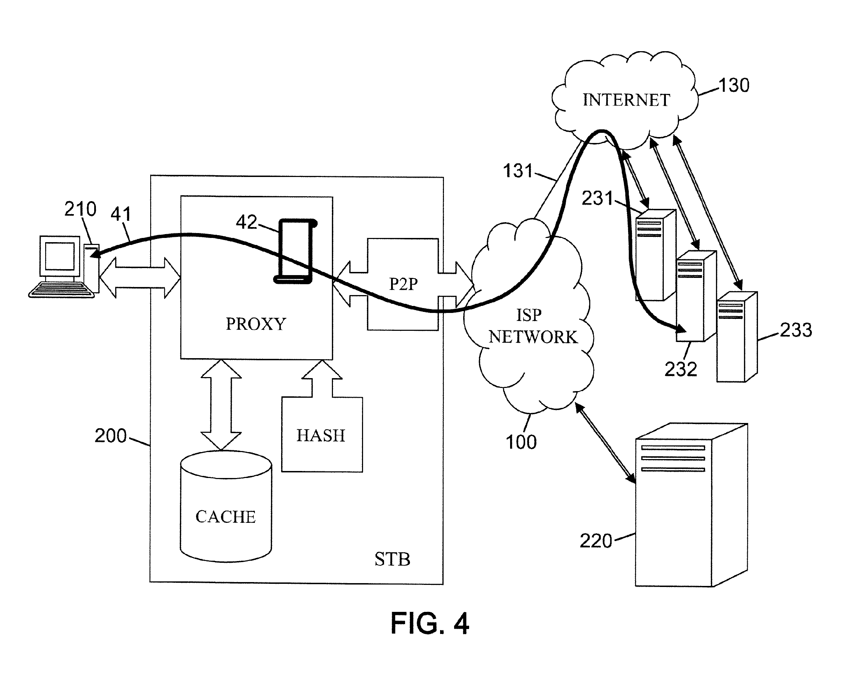

Operation of the device of **FIG.2** and **FIG.3** will now be described by way of exemplary embodiments of the method of the present invention, in view of **FIG.4-9** of the drawings.

In these Figures, a Set-Top Box 200 as the ones which are diagrammatically illustrated in **FIG.1** under references 101 through 104, is represented between the user's personal computer 210 on its left side, and the Internet 100 on its right side.

A central server 220 of the ISP is connected to the ISP network 100. In addition, other servers 231, 232 and 233 of various content providers are further connected to the Internet 130. Such content providers may be other Internet Service Providers or any kind of commercial or non commercial agents which provide access to any kind of contents, be it free of charges or not. However, it will be appreciated that the principles of the invention cannot be applied to pre-fetching of contents when strong encryption is required for accessing the contents, e.g. contents reserved to a determined group of users who have to use HTTPS (Hypertext Transfer Protocol Secured) protocol.

Throughout **FIG.4-9****,** the above components of the system are diagrammatically represented as a non changing background in front of which various steps of embodiments of the method are illustrated by way of arrows and of stylized "files" in bold lines, which symbolize the flows of data exchanged between the system components.

Hence, in **FIG.4****,** arrow 41 illustrates the downloading of contents from content servers 231-233 and/or from the ISP's central server 220, responsive to queries entered by the user through its personal computer 210 (client).

While controlling the downloading of contents, the proxy part 201 of STB 200 monitors all queries made by the user, e.g. URL fetched through the HTTP protocol, address of the FTP protocol, or P2P identifier. The proxy part 201 maintains a list 42 of those queries. Each entry on this list has several items.

The list 42 thus contains, for each one of the contents, a unique identifier of the content which is independent of the location on the Internet from which the content has been downloaded. As was already mentioned, such identifier may be the result returned by a SHA-256 hash function applied on the content itself (not on the corresponding query). In practise, a content identifier is typically a multi-digit alphanumeric value, e.g., 0x4567aab.

The list 42 further contains, for each one of the contents, a content location indicator which indicates a location of the content on the Internet (from which it has been downloaded), e.g., its URL which can have the form of a string a characters such as "http://contentserver1.comlcontents/123.bin".

For instance, the list 42 may be obtained from the top of the list of all requested contents, as may be reflected by the STB log file. Advantageously, the list 42 is limited to a given number of entries, e.g. between 5 and 100 entries, preferably about 20 entries.

In preferred embodiments, the list 42 maintained by the proxy part 201 of the STB further contains, for each one of the contents, information as to the content size. The proxy part 201 may then advantageously orders the list 42 by decreasing size of content. Any other criteria may also be used for ordering the list, in replacement of, or in addition to the content size.

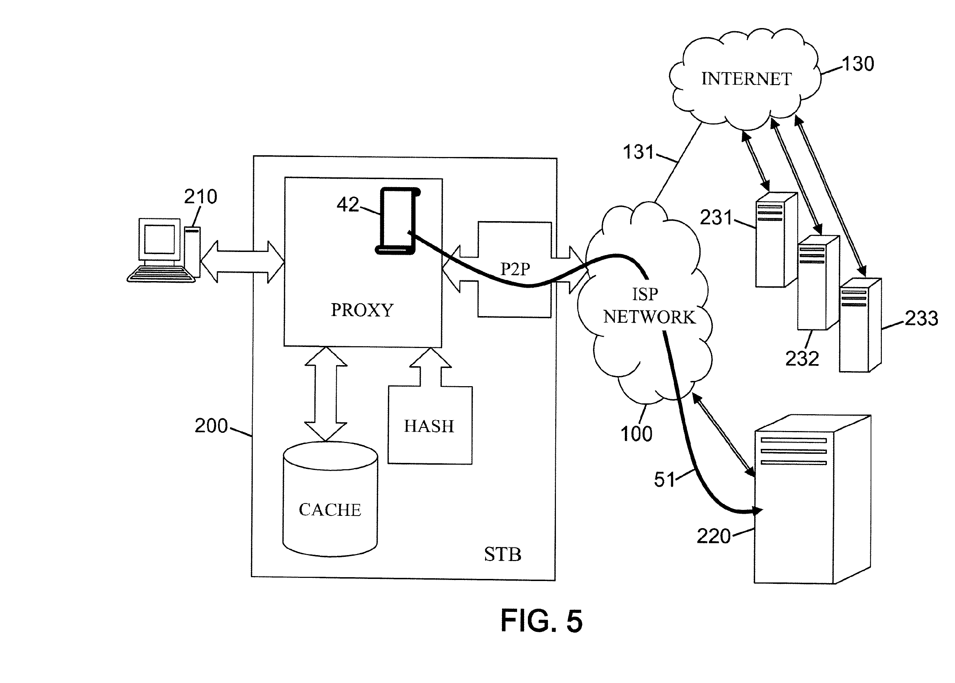

With reference to **FIG.5****,** each STB of the ISP's network regularly sends its list 42 of requested contents to the ISP's central server 220. This is symbolized in **FIG.5** by arrow 51.

The sending of the list 42 can occur at regular intervals of time. The exact time of sending by each of all the STBs of the ISP network may be jittered in a random way so that all STB do not send their content at the same time, thus avoiding flooding the central server 220. For instance, there exists timing rules applied within the network of STBs, which involve a time spreading of sending by each STB that sends its list of downloaded contents to the central server 220_{[A1]}. This results in flooding of this server due to implementation of the present invention being avoided.

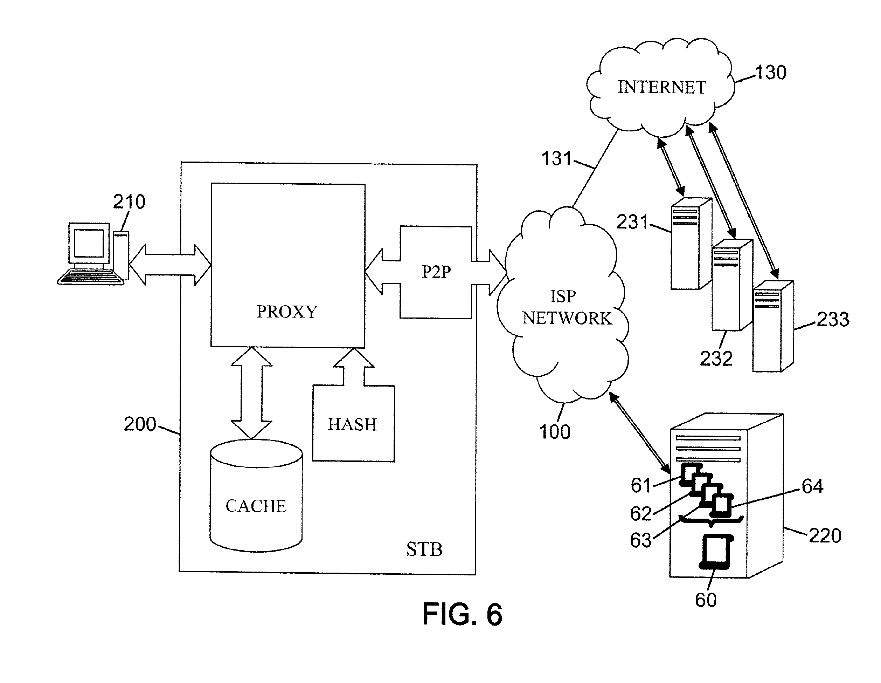

The ISP's central server 220 continuously receives content lists from the respective STBs of the network, like lists bearing references 61-64 in **FIG.6****.** It continuously computes an aggregated list 60 of popular contents. To do so, it builds a map from the content identifiers towards associated content location indicators and content sizes when the latter information is present in the received lists.

Frequency of each content identifier may be computed from the lists 61-64 sent by the Set-Top Boxes. Typically a counter is used for each unique content identifier, whereby contents retained as popular contents in the table thus obtained, are actually the most frequently downloaded contents.

The unique content identifier can be associated to several content location indicators and a single content size. This is because, e.g., mirroring is used by the content provider, and/or the same content is available from different ISPs, and accessed by users from different ISP servers.

It will be appreciated here why the hash function is preferably applied directly to the content itself and not, e.g., to the URL of the content. This is because, in case access to the same content is requested by respective users from different locations in the network, i.e., from different content provider servers, said accesses will nevertheless give rise to computation of the same identifier.

Thus, the count of the number of accesses to this content will take all of these accesses into consideration. Stated otherwise, the central server will recognize that one and the same content is concerned and will increase its count accordingly. In contrast, identification of a content through the corresponding access query, e.g. from a digest obtained from the content URL, would have the consequence that the same content, when accessed from different servers (that is to say from different URLs), would be counted as distinct contents. This would affect the reliability of the statistics as to content frequency.

Preferable, the whole table is wiped at regular interval (typically each 12 or 24 hours) so that frequency is computed only for fresh, i.e., recently accessed contents. An approach according to a variant could be to associate an expiration date to each of the entries in the table and have them expire individually. The granularity of the expiration time can be simplified, e.g. each 6 hours. The table may be sorted by content frequency and if a content frequency is above a given threshold (e.g. 5% of all the ISP's Set-Top Boxes) it is kept as popular content.

All popular contents are thus kept in a list 60. For each one of them is associated, in addition to the corresponding unique content identifier, a substring location indicator to match by any of the later (i.e., subsequent) access queries made by users regarding this content. For example, this substring location indicator to match may be determined by keeping the common part in all the queries used for this content (identified by its unique identifier), typically using an exact substring matching algorithm (e.g. from URI like "il.ytimg.com/123456?q=56" and "i2.ytimg.com/123456?q=78", the system extracts a location indictor which reads: ".ytimg.com/123456?q="). A security mechanism can be put in place in order to check that two different popular contents don't have the same substring location indicator to match.

Instead of the above described substring location Indicator matching technique, any other suitable string matching technique, based on a regular expression that will always be univocally associated to a specific content in subsequent queries as regards this content, may be used.

In a preferred embodiment, the list 60 of popular contents is set up in the central server 220 based, further, on the information as to size of the contents which is contained, for each one of the contents, in the lists of downloaded contents received from the STBs. In preferred embodiments, only contents which have a size above a certain threshold may be retained in the list 60. Hence, the pre-fetching of popular contents which is featured by the present invention may be implemented only for contents of significant size, thereby realizing a trade-off between the transmission overhead induced by the invention and the speeding-up in content access thus obtained.

Any other criteria may be used, in replacement of or in addition to the above described content download frequency and content size, either alone or in combination.

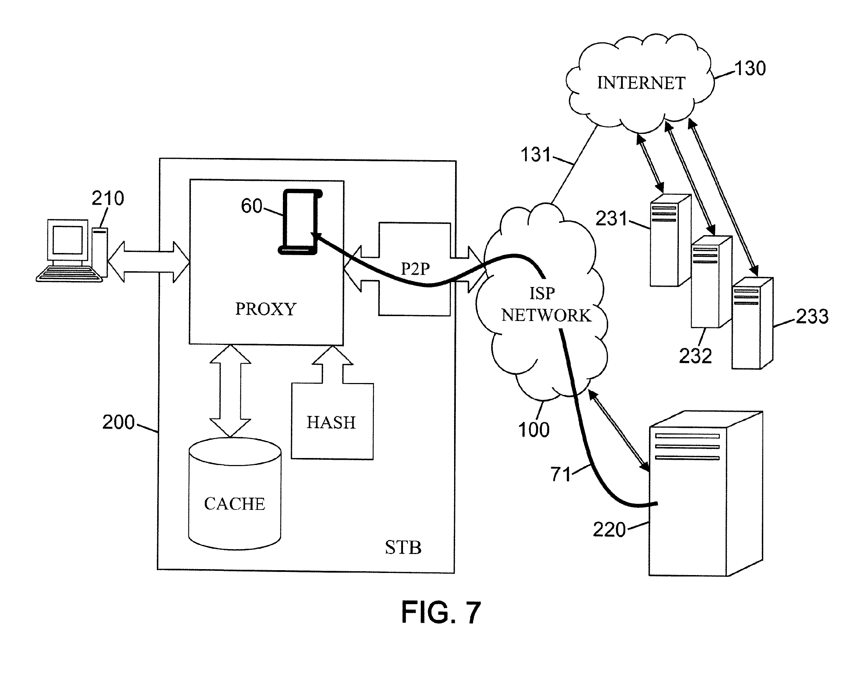

At regular interval, the list 60 of most popular contents (containing unique identifier and substring location indicator to match) is sent to all the Set-Top Boxes of the ISP's network by the central server 220 in a request to pre-fetch those contents. This request to pre-fetch is illustrated by arrow 71 in **FIG.7** as regards STB 200.

As the one with ordinary skills in the art will appreciate, the request to pre-fetch 71 may be sent to a subset of the ISP's Set-Top Boxes only, e.g., when the service is limited to a sub-group of privileged users. For instance, the privileged users may be users who have been identified as users who download a lot of contents, and/or users who have paid for the pre-pushing service.

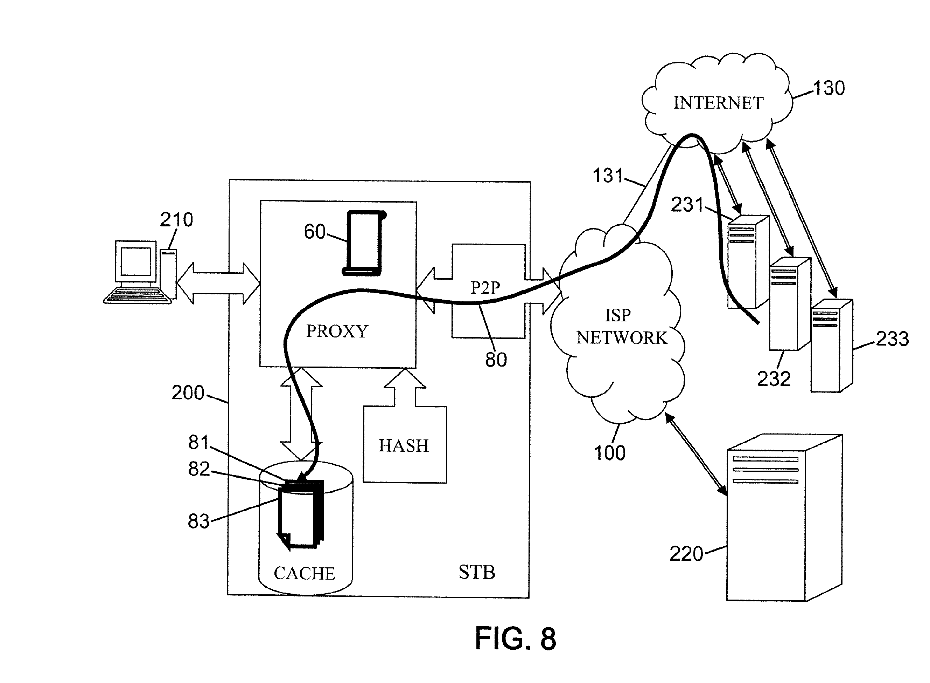

With reference to **FIG.8****,** the set-top boxes then fetch the popular contents, preferably in a coordinated way as regards timing, typically through a P2P client (e.g. BitTorrent client). For instance the popular contents 81-83 can be pre-fetched at appropriate time, e.g. during the night when normal traffic is low within the geographical zone covered by the ISP network, as symbolized by arrow 80.

The above steps are performed under the control of the proxy part 201, based on the data in the list 60. The unique content identifier is sufficient to identify the content to fetch, assuming that the operator has put in place an appropriate infrastructure for the coordinated download of content, e.g. by loading the content on the central server 220 which acts as a seed into a P2P network.

Otherwise, each of the popular contents has to be pre-fetched from a location on the Internet where it is stored, e.g. on the server of another ISP or on any other server. Such being the case, at least one location indicator (e.g., a URL or URI) for each one of the popular contents is included to this end in the list 60 of popular contents which set up and sent to the STBs by the central server 220. The popular contents are then fetched 80 from that location on the Internet which is indicated by the associated location indicator provided in the request to pre-fetch 60 (**FIG.7**). For instance, if one considers the above mentioned example of a content for which the unique content identifier obtained as described above equals "0x4567aab", then the content can be loaded in the central server 220 under the file name of, e.g., "0x4567aab.bin". It may then be accessed by way of a query in the form of "http://central_server/contents/0x4567aab.bin".

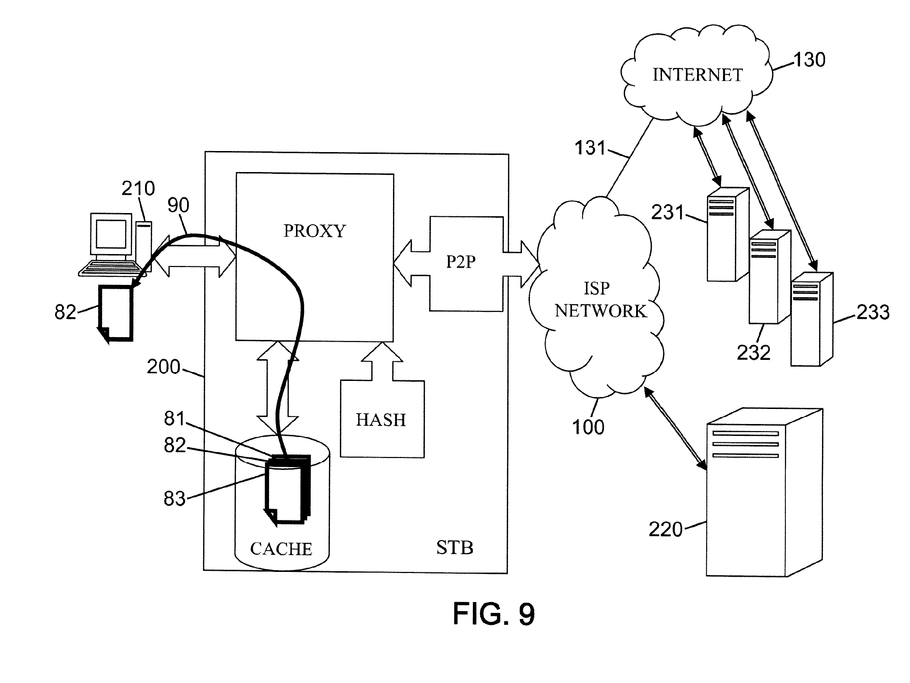

The result and advantage of the pre-fetching 80 thus obtained is illustrated in **FIG.9****.** Subsequent to this pre-fetching, that is to say when a user later queries a content, the requested URL, URI, P2P indicator, etc., as the case may be, is compared to the substring location indicators to match which are respectively associated to all the pre-fetched contents 81-83 stored in the medium 202 of the STB.

If there is a match, the corresponding cached content, for example content 82 in **FIG.9****,** is directly returned to the user by the STB, without the need to fetch it from the network through Internet 130, and thus within a reduced time compared to the prior art.

These steps, which again are carried out under the control of the proxy part 201 of the STB, are illustrated by arrow 90 in **FIG.9****.**

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein.

A non exhaustive catalogue of additional features which might be incorporated in embodiments of the invention would encompass the features that follow:
· Embodiments of the invention may play nicely with Parental Control systems. If Parental Control is done on a user computer in front of the STB, this is not an issue. Otherwise, the software run at the central server make provisions so that the blacklisted contents be not included in the list of popular content to pre-fetch on the STB.
· One could consider letting the user use the service at his will, i.e., have the ability to by-pass the transmission of the list of contents that he/she has downloaded. Such feature could help to take into consideration potential legal rule which may potentially exist to preserve privacy of users in some countries.
· One could consider letting users take an active part in the edition of the list of content to pre-fetch on the central server of the ISP. For instance, the users might be invited to participate to a poll by voting for their favourite contents to be elected as popular contents.
· Finally, one could consider to pre-fetch contents only on a subset of the ISP's Set-Top Boxes, according to pre-determined profiles of user, to a commercial policy favouring privileged customers of the ISP, or to any other kind of criteria.

A person skilled in the art will readily appreciate that various parameters disclosed in the description may be modified and that various embodiments disclosed and/or claimed may be combined without departing from the scope of the invention.

Conversely, an embodiment of the present invention may not include all of the features described above. Therefore, it is intended that the present invention not be limited to the particular embodiments disclosed, but that the invention include all embodiments falling within the scope of the appended claims. The present invention can be implemented in a combination of hardware and software. Any processor, controller, or other apparatus adapted for carrying out the functionality described herein is suitable. A typical combination of hardware and software could include a general purpose microprocessor (or controller) with a computer program that, when loaded and executed, carries out the functionality described herein.

## Claims

1. A method for providing access by users of an Internet Service Provider or ISP network, to contents stored on the Internet, comprising the following steps, which are carried out at an end-user equipment (200) of the ISP network:
· monitoring the contents (41) downloaded in the end-user equipment from the Internet upon queries from a user, and sending (51) to the central server of the ISP network a list (42) of at least some of said downloaded contents;
· receiving from the central server a request (71) to pre-fetch a list (60) of popular contents set up at said central server based on lists of downloaded contents respectively sent by a plurality of the end-user equipments of the ISP network;
· pre-fetching (80) the popular contents (81-83) defined by the list of popular contents and storing the pre-fetched popular contents into a storage medium (202) of the end-user equipment;
· upon later query from the user to download one of the popular contents stored in the storage medium, accessing (90) to said one of the popular contents in the storage medium of the end-user equipment.

2. Method according to claim 1, wherein the list of the downloaded contents sent by any end-user equipment comprises, for each one of the downloaded contents, a unique identifier associated with the content irrespective of the location of the content on the Internet, and a location indicator which indicates a location of the content on the Internet.

3. Method according to claim 2, wherein the list of the downloaded contents sent by the end-user equipment further comprises, for each one of the downloaded contents, the size of the content.

4. Method according to anyone of the preceding claims, wherein the sending of the list of downloaded contents is sent according to timing rules which cause that lists of downloaded contents respectively sent by a plurality of end-user equipments are jittered.

5. Method according to anyone of the preceding claims, wherein the request to pre-fetch the list of popular contents has priority over any caching scheme performed autonomously in the end-user equipments as regards management of the storage medium.

6. A method for providing access by users of an Internet Service Provider or ISP network to contents stored in the Internet, comprising the following steps, which are carried out at a central server (220) of the ISP network:
- receiving (51) from a plurality end-user equipments (101-104, 200) of the ISP network respective lists (61-64) of at least some of contents downloaded in each one of said end-user equipments from the Internet upon queries from user (210);
- setting up a list (60) of popular contents based on the received lists of downloaded contents; and,
- sending (71) to at least some of the end-user equipments of the ISP network a request to pre-fetch and store the popular contents defined by the set up list, so that, upon later query from a user to download one of the popular contents, said requested popular content may be accessed (90) in a storage medium (202) of the end-user equipment used for making said later query.

7. Method according to claim 6, wherein the list of the popular contents is set up based on the observation of the frequency of unique identifiers respectively associated with anyone of the downloaded contents, which identifier is contained, for each one of the contents, along with a location indicator which indicates a location of the content on the Internet, in the lists of downloaded contents received from the end-user equipments.

8. Method according to claim 7, wherein the list of popular contents is set up based, further, on information as to size of the contents which is further contained for each one of the contents, in the lists of downloaded contents received from the end-user equipment.

9. Method according to anyone of claims 7 and 8, wherein the request to pre-fetch the list of popular contents contains, for each one of the popular contents, the unique identifier of the content, and a substring location identifier obtained by keeping the common part of all queries used for this content as further reflected in the lists of downloaded content received from the end-user equipments, which substring identifier being usable by the end-user equipment to access the popular content in the storage medium based on the later query by the user.

10. Method according to claim 9, wherein the request to pre-fetch the list of popular contents has priority over any caching scheme performed autonomously in anyone of the end-user equipments as regards its storage medium.

11. A device for providing access by a user of an Internet Service Provider or ISP network, to contents stored on the Internet, comprising:
- an application level proxy unit (201);
- a storage medium (202) adapted to store contents; and,
- a download unit (204) adapted to pre-fetch contents and store the pre-fetched contents in the storage medium, under control of the application level proxy unit
wherein the application level proxy unit is configured:
- to monitor contents (41) downloaded from the Internet upon queries from a user;
- to send (51) to a central server (220) of the ISP network a list (42) of at least some of said downloaded contents;
- to control the download unit, responsive to a request (71) received from the central server, to pre-fetch (80) a list (60) of popular contents (81-83) set up at said central server based on lists (61-64) of downloaded contents respectively sent by a plurality of end-user equipments (101-104, 200) of the ISP network and to store the pre-fetched contents into the storage medium; and,
- to access (90) one (82) of the popular contents stored in the storage medium, upon later query from the user to download said popular content.

12. Device according to claim 11, further comprising a computational unit (203) adapted to generate a unique identifier of any downloaded content, which identifier is included in the list of downloaded contents for each one of the contents along with a content location indicator which indicates a location of the content on the Internet.

13. Device according to claim 12, wherein the list of the downloaded contents sent to the central server further comprises, for each one of the contents, the size of the content.

14. Device according to anyone of the claims 11 through 13, wherein the request to pre-fetch the list of popular contents has priority over any caching scheme performed autonomously as regards the storage medium.

15. An end-user equipment (200) of an Internet Service Provider or ISP network, comprising a device according to anyone of claims 11 through 14.
